Europäisches Patentamt

European Patent Office

Office européen des brevets

(11) Publication number: **0 109 475**
**B1**

# EUROPEAN PATENT SPECIFICATION

(45) Date of publication of patent specification: **01.06.88**

(51) Int. Cl.⁴: **B 29 D 30/30**

(21) Application number: **83101394.1**

(22) Date of filing: **14.02.83**

(54) Length correcting device for rubber strips in the building of tyres.

(30) Priority: **27.09.82 US 424736**

(43) Date of publication of application:
**30.05.84 Bulletin 84/22**

(45) Publication of the grant of the patent:
**01.06.88 Bulletin 88/22**

(84) Designated Contracting States:
**DE FR GB IT LU**

(56) References cited:
**DE-A-2 819 410**
**US-A-3 728 181**
**US-A-4 096 008**

(73) Proprietor: **THE FIRESTONE TIRE & RUBBER COMPANY**
**1200 Firestone Parkway**
**Akron, Ohio 44317 (US)**

(72) Inventor: **Kipling, Kent K.**
**33061 Roundhead Place**
**Solon Ohio 44139 (US)**

(74) Representative: **von Raffay, Vincenz, Dipl.-Ing. et al**
**Patentanwälte Raffay, Fleck & Partner Postfach 32 32 17**
**D-2000 Hamburg 13 (DE)**

Courier Press, Leamington Spa, England.

## Description

This invention relates to a method for applying a length of elastomeric material having a first and second end to a drum according to the preamble of claim 1 and an apparatus for correcting the length of a piece of elastomeric material according to the preamble of claim 3.

Such a method and apparatus has been known from the DE-A-2,819,410.

The known apparatus is directed to a method and apparatus wherein the outer ply intended to be applied to the tire building drum is accurately measured using a combination of a photocell array and a light curtain in order to measure the actual length of the outer ply to be applied to the tire building drum. The measured value is then compared with the theoretical length required to wrap the tread ply about the tire building drum and a value related to the difference between the actual measured length of the tread ply and the theoretical length of the tread ply required to wrap about the tire building drum is provided to a mechanical device which is adapted to adjust the gap between application rollers and the tire building drum in order to effect a stretching of the ply as it is being applied to the tire building drum in order to change the length of the ply from the actual measured length to the theoretical length.

In essence, this prior art teaching employs a method whereby the actual length of the tread ply that is to be applied to the tire building drum is measured and is subsequently stretched to the theoretically desired length as it is being applied to the tire building drum. The accuracy of the application of the tread ply member to the tire building drum is dependent upon the lack of variance between the theoretical length required for the tread ply to wrap about the tire building drum and the actual length required to wrap about the tire building drum which may be significantly different from the theoretical length due to variances in the diameter of the tire building drum. These differences result from differences in the thickness of material previously applied thereto or in an environment where a multiplicity of tire building drums is employed, variance may be introduced due to the difference in the dimensions of the tire building drums themselves.

Variance in the diameter of the tire building drum however will cause a corresponding difference in the length of ply material required to wrap around the tire building drum. This is especially critical in cases where it is desired to butt splice the ends of the material being applied to the tire building drum such as in the application of outer tread plies and thus requires an accurate application to the tire building drum in order to avoid either overlap of the ends of the material or gaps therein due to the improper length of material being applied thereto.

The further prior art is described below:

Means for material application are old in the art as evidenced by U.S. Patent No. 3,157,542 to Trevaskis which relates to the feeding of sheets of rubber to a former, U.S. Patent No. 3,728,181 to Simmons which discloses a rubber material fed from a roll past a cutter onto a drum, U.S. Patent No. 3,909,338 to La Blonde et al which discloses supplying an elastomeric strip to a bead ring past a cutting unit, U.S. Patent No. 4,222,811 to Enders which discloses a tail retractor and tray feeder in the form of flotation trays including automatic mechanical systems for feeding the tacky rubber material to a drum, and U.S. Patent No. 3,898,116 to Katagiri et al which discloses a support having vacuum in the central portion to hold a carcass sheet onto a conveyor and air pressure on the side to float the side. U.S. Patent Application Ser. No. 147,644 to Miller filed May 17, 1980 discloses a means for automatically applying a tire component to a tire building drum including means for centering and stretching the component. This application is hereby incorporated herein by reference.

Although some of the art discussed above does disclose means for applying a rubber material to a tire building drum, none of the above noted art discloses a means for applying an innerliner to a tire building drum wherein the need for a splice gumstrip is eliminated or have other drawbacks. Further, the final guide system employed by the instant invention to move the stock to the center of the applicator allows for stock width measurement and precise centering without the edge distortion caused by the guiding systems of the prior art.

Thus, it is object of the present invention to enhance the method and apparatus cited at the beginning, avoiding the mentioned drawbacks so that then are readily adapted to be used in conjunction with an automated tire assembly system wherein a portion of innerliner material may be cut from a continuous roll of such innerliner material and applied to a tire building drum in such a fashion as to eliminate the need for a splice gumstrip and further be applied in such a manner that allows for stock width measurement and precise centering without the possible edge distortion of known guiding systems. This object is solved by the method and apparatus as characterized in claim 1 and 3, respectively.

The present invention thus specifically provides method and apparatus which allow for stock width measurement and precise centering without the possible edge distortion of known guiding systems.

### Brief Description of the Drawings

Figure 1 is a side elevation of the innerliner applicator system embodying the instant invention.

Figure 2 is a simplified perspective drawing showing the main operative elements of the innerliner applicator shown in Figure 1.

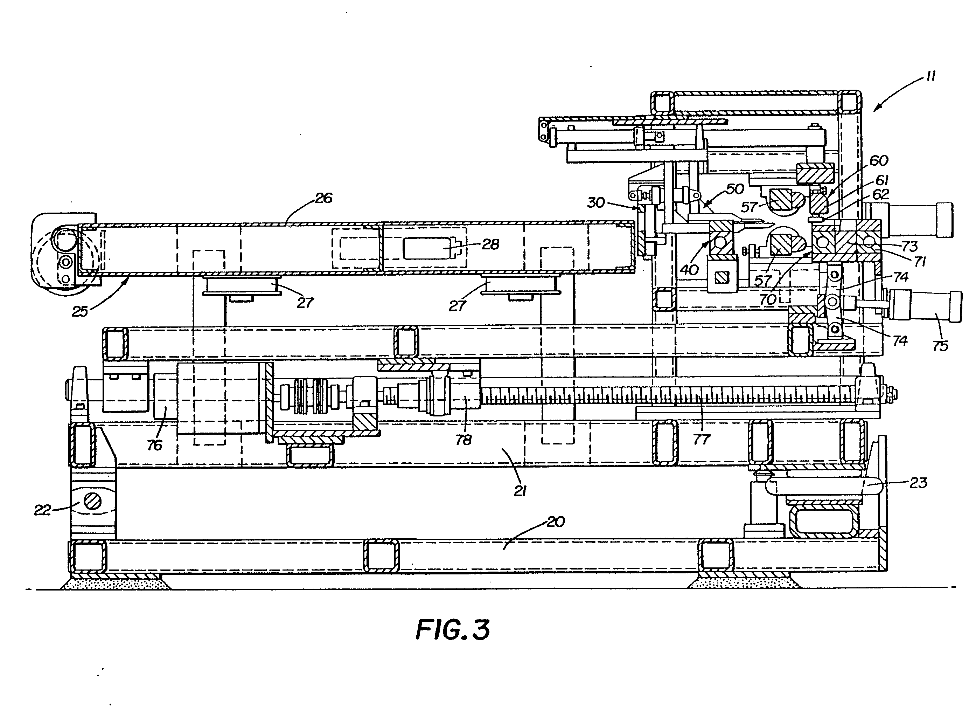

Figure 3 is a side view of the innerliner applicator showing the details of construction thereof.

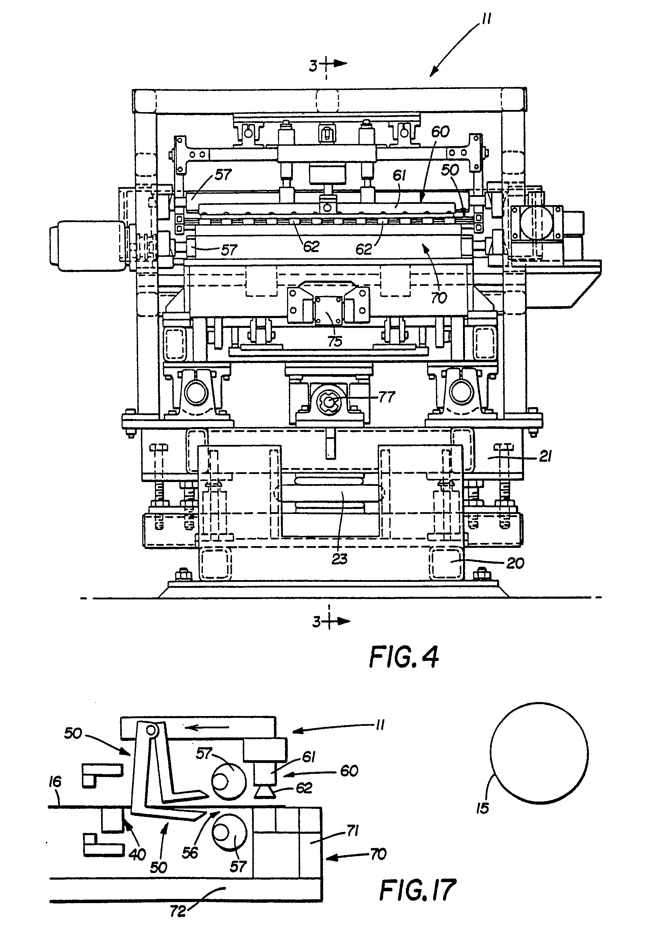

Figure 4 is a front view of the apparatus shown in Figure 3.

Figure 5 through 17 are simplied schematic drawings illustrating the sequence of operation of the innerliner applicator.

Figure 18 is a schematic illustration of the fiber optic guidance unit of the instant invention.

Description of an Exemplary Embodiment

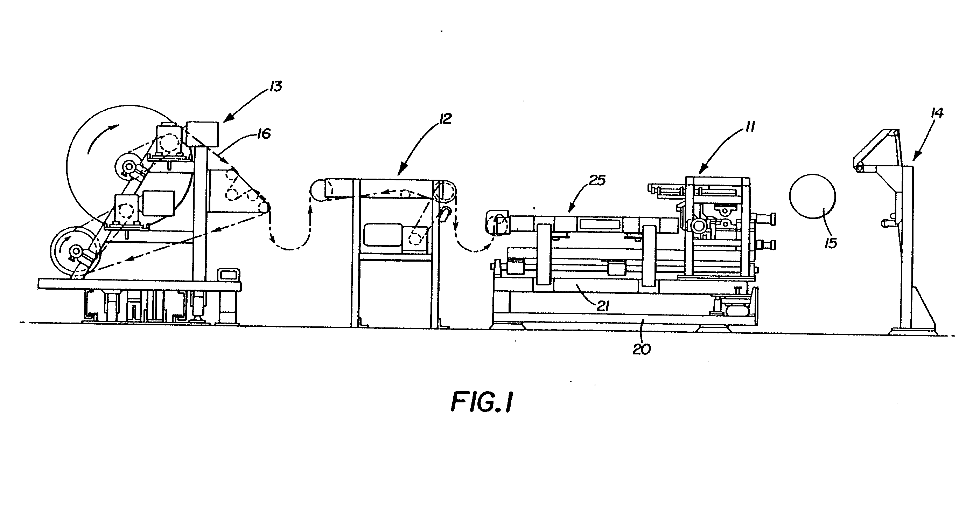

Referring now to Figure 1 of the drawings, there is disclosed the instant invention comprising an applicator 11, a splice conveyor 12, a feed mechanism 13 and a holding roll 14. In the exemplary embodiment, the applicator 11 is adapted to apply innerliner material 16 to the tire building drum 15. A large roll of a continuous length of innerliner material 16 is fed from the feed mechanism 13 to the splice conveyor 12. The splice conveyor 12 is adapted to allow lengths of innerliner material from different rolls to be joined in order to form a continuous length thereof. From the splice conveyor 12, the innerliner material travels to the applicator 11.

The applicator 11 grasps the end of the innerliner material 16 and moves the end to the bottom of the tire building drum 15 and presses the innerliner material 16 to the bottom of the drum 15 causing the innerliner material 16 to adhere to the bottom of the tire building drum 15 due to the tackiness of the innerliner material 16. The tire building drum 15 is then rotated in order to cause the innerliner material 16 to partially wrap around the tire building drum 15. After a sufficient portion of innerliner material 16 has been wrapped on the tire building drum 15, the innerliner material 16 is severed by a cutting mechanism contained within the applicator 11. The applicator 11, in conjunction with rotation of the tire building drum 15, then causes the remainder of the cut piece of innerliner material 16 to be applied to the tire building drum 15. The holding roll 14 is utilized to assist in holding the innerliner material 16 on the tire building drum 15 for reasons which will be discussed more fully below.

It can thus be seen that there are provided means for automatically dispensing from a continuous roll of innerliner material a length of said innerliner material suitable for applying to a tire building drum and the means for applying said innerliner material to said tire building drum. The instant invention may be used in conjunction with an automated tire assembly system disclosed in patent Application Serial No. 386, 373 entitled Work Station and filed in the name of Loeffler et al, which application is specifically incorporated by reference herein.

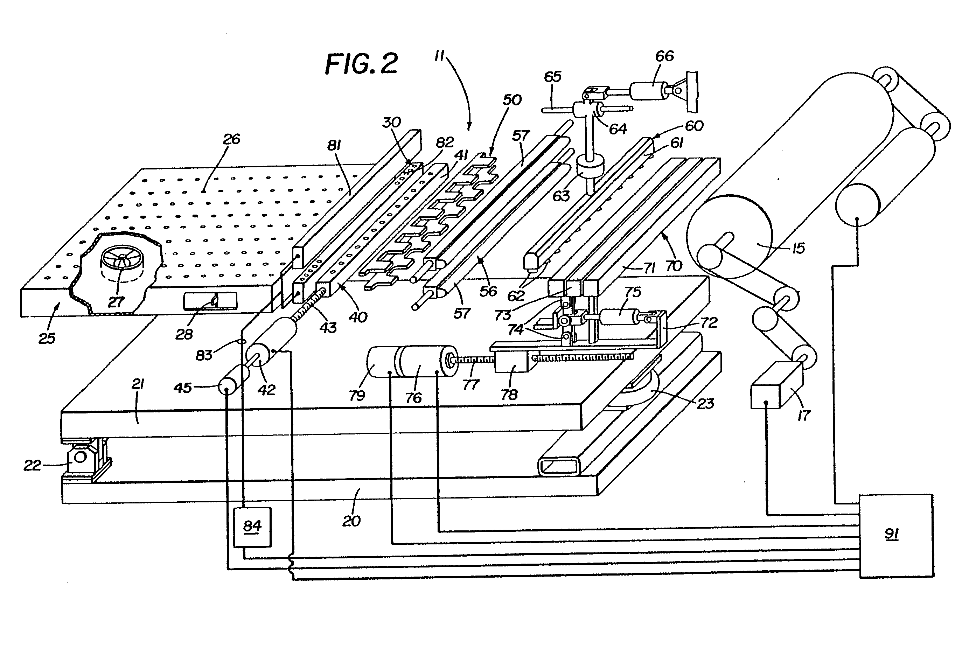

Referring now to Figure 2 of the drawings, there is shown a simplified schematic diagram showing the major operative elements of the applicator 11. The applicator 11 rests on base 20. Sub-frame 21 is supported upon the base 20 by means of pivot connections 22 and air spring 23. For reasons which will become more apparent below, the sub-frame 21 may be pivoted about the pivot connections 22 relative to the fixed base 20 by causing the air spring 23 to either inflate or deflate by means of pneumatic circuitry well known to one skilled in the art.

Supported upon the sub-frame 21 is air table 25. Air table 25 is comprised of a flattened rectangular box-like structure having a perforated upper surface 26 and a plurality of fans 27 mounted on the bottom of the air table 25 in order to introduce air into the generally rectangular box-like structure. The air introduced into the generally box-like structure by the fans 27 is exhausted through the top of the box-like structure through the perforated upper surface 26 thus providing an air-bearing type surface over which innerliner material 16 may be transported. As will be appreciated later, the air-bearing provided by the air table 25 facilitates both longitudinal and latitudinal movement of the innerliner material upon the air table 25 to allow positioning thereof. Located on the side of the air table 25 is baffle 28 which may be adjusted to either increase or decrease the opening of the baffle 28 in order to adjust the amount of air exhausted through the perforated upper surface 26.

Disposed proximate to the air table 25 is fiber optic guidance unit 30 which is comprised of two linear arrays of fiber optic cables in optic communication with a series of photo electric source/detectors which are utilized to determine the position of the innerliner material 16 with respect to the fiber optic guidance unit 30 in order to facilitate positioning of the innerliner material as more fully described below.

Lateral adjustment unit 40 is comprised of a manifold 41 having a series of orifices in the upper surface thereof to which a vacuum may be selectively applied. The manifold 41 may be laterally displaced by means of drive motor 42, rotating lead screw 43, acting in conjunction with an engagement nut on manifold 41 in order to allow the manifold 41 to be laterally displaced. The position of the lateral adjustment unit 40 can be determined with rotary encoder 45.

Disposed above the lateral adjustment unit 40 is gripper unit 50 which is adapted to grasp the innerliner material upon actuation of a cylinder (not shown) by means of a pair of interlocking fingers which may be moved relative to one another by means of the cylinder.

Mounted adjacent to the gripper unit 50 is crush cutter 56 which is comprised of two eccentrically mounted cutting elements 57 adapted to be rotated into an engaging position by a cylinder (not shown) in order to sever the innerliner material 16 disposed between the cutting elements 57. The details of construction of the crush cutter are more fully illustrated in U.S. Patent Application Serial No. 321,983 filed in the name of James E. Hogan et al, which patent application is hereby incorporated by reference.

Disposed forward and above the crush cutter 56 is upper guide member 60. The upper guide member 60 is comprised of a manifold 61 having on the bottom thereof a plurality of cups 62 to which either a vacuum or air pressure may be applied. The manifold is mounted via cylinder 63 to slide member 64 which is adapted to slide along the track 65 by means of actuation of cylinder 66. The upper guide member 60 is utilized to transport the end of the innerliner material 16. It should be appreciated that the manifold 61 may be moved up and down by means of cylinder 63 and longitudinally by means of cylinder 66.

The transfer unit 70 is comprised of a front manifold 71 which is fixedly attached to transfer frame 72 and rear manifold 73 which is linked to transfer frame 72 by links 74. Pivotly attached to the links 74 is cylinder 75 having its barrel end pivotly attached to the transfer frame 72. The actuation of the cylinder 75 causes the links 74 to be pivoted about their common connection thereby causing the rear manifold 73 to be raised or lowered.

The transfer frame 72 is longitudinally movable by means of drive motor 76 driving lead screw 77 which is engaged with lead screw nut 78 which is fixedly attached to the transfer frame 72. There is thus provided a means for longitudinally moving the transfer unit 70 from a position proximate to the manifold 61 to a position proximate to the bottom of tire building drum 15. The position of the transfer unit 70 can be determined from the outputs provided by encoder 79.

It should now be appreciated that there are provided means for transferring innerliner material 16 over the air table 25 past the fiber optic guidance unit 30 which provides control of the lateral adjustment unit 40 in order to centrally position the innerliner material 16 with respect to the centerline of applicator 11 wherein the innerliner material may be severed by the crush cutter 56 and then applied to the tire building drum 15 with the assistance of the transfer unit 70 and the guide member 60, all as more fully described below.

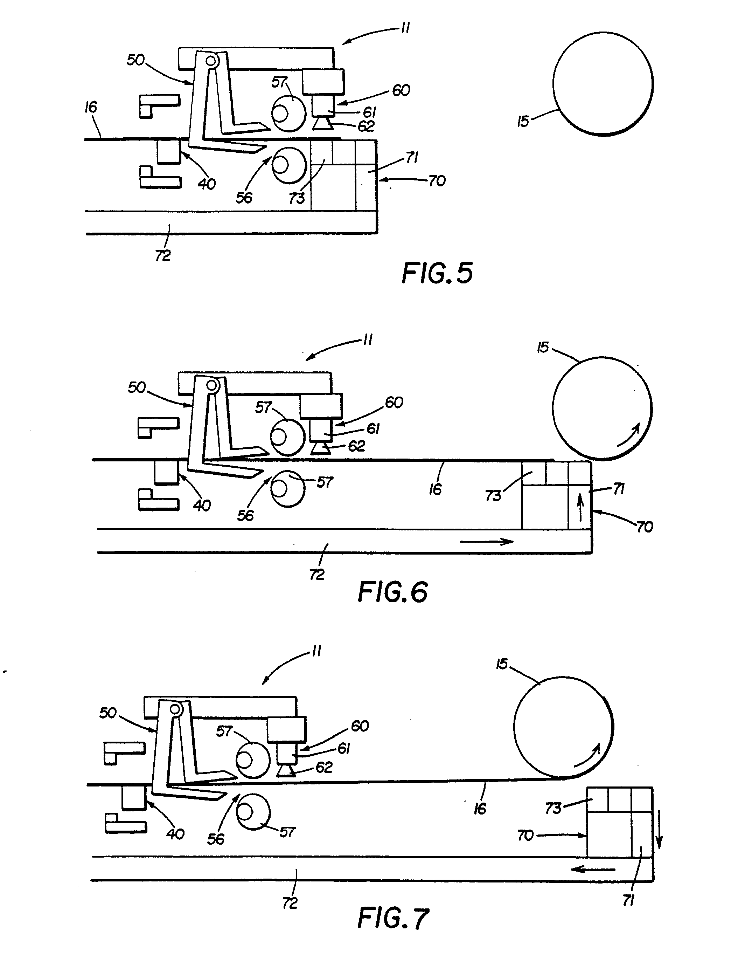

Referring now to Figure 5 of the drawings there is shown a simplified schematic drawing of the main operative elements of the applicator 11. Specifically, there is shown the innerliner material 16 disposed on the lateral adjustment unit 40 and the transfer unit 70. The gripper unit 50 is open and the crush cutter 56 is also open while the upper guide member 60 is in its raised rearward position. The transfer frame 72 is also in its most rearward position. The leading edge of the innerlinner material 16 is held to the rear manifold 73 by a vacuum applied thereto. This configuration represents the starting position of the sequence of operation of the applicator 11.

In the second step in the sequence of operation of the applicator 11, as disclosed in Figure 6 of the drawings, the transfer unit 70 is moved forward toward the tire building drum 15. Simultaneously the drum 15 is rotated to position a tack strip on the drum 15 at its dead center bottom and the air spring 23 is inflated in order to cause the sub-frame 21 to pivot about pivot connections 22 to thereby cause transfer frame 72 and thus transfer unit 70 to move upwardly toward the tire building drum 15.

In the third step in the sequence of operation of the applicator 11 as shown in Figure 7 of the drawings, the transfer unit 70 has been positioned such that the leading edge of the innerliner material 16 has been placed in contact with the tack strip of the tire building drum 15 in order to cause the innerliner material 16 to adhere to the tack strip of the tire building drum 15. After the leading edge of the innerliner material 16 has been transferred to the building drum 15 the transfer unit 70 is moved downwardly and retracted toward the applicator 11. During the transfer of the leading edge of the innerliner material 16 to the tire building drum 15, the drum 15 is rotated and the transfer unit 70 is moved forward synchronously. As the rear manifold 73 passes the drum 15 air pressure is provided to the rear manifold 73 and the subframe 21 is simultaneously lowered by air spring 23 in order to effect the transfer of the innerliner material 16 to the tire building drum 15.

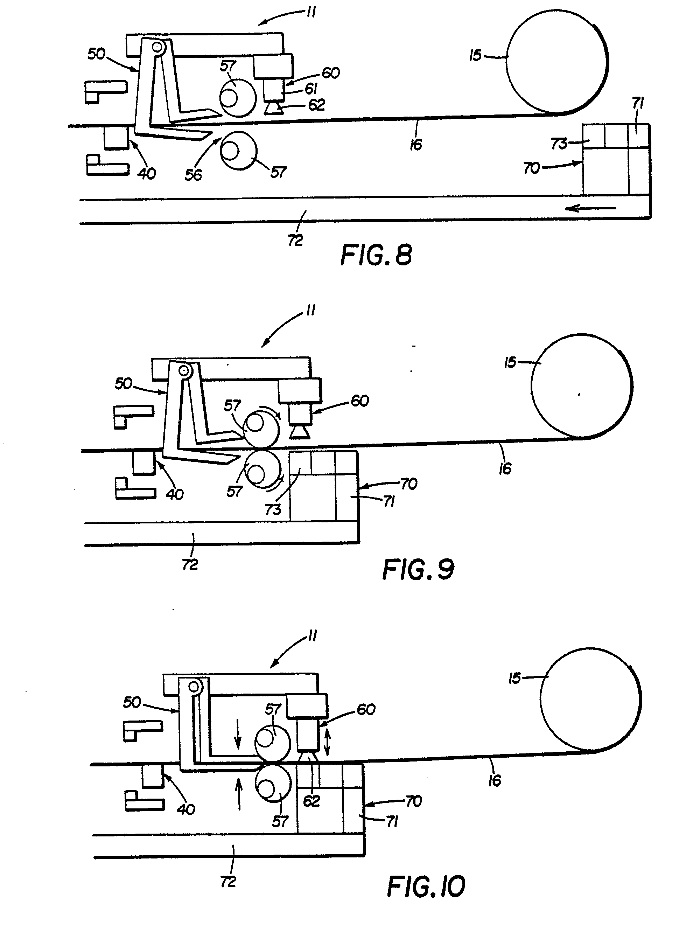

The next step of the applicator sequence of operations is disclosed in Figure 8 of the drawings. In this step the fiber optic guidance unit 30 in combination with the lateral adjustment unit 40 causes the innerliner material 16 to be centered within the applicator 11.

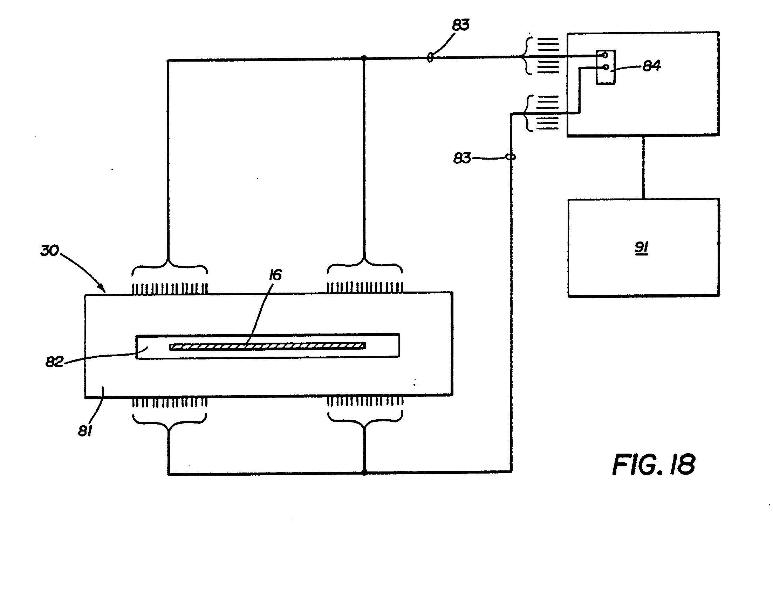

Specifically, the fiber optic guidance unit 30 as shown in Figure 18 of the drawings is comprised of a mounting plate 81 having an opening therein 82 through which the innerliner material 16 may pass. Disposed towards the ends of the opening 82 are a series of paired receptacles for receiving the ends of fiber optic cables. At each end of the mounting plate 81 are located eight pairs of fiber optic cable receptacles located approximately one-half inch apart in which fiber optic cables may be mounted. The fiber optic cables 83 mounted within the mounting plate 81 are in communication with a plurality of conventional photoelectric source/detectors 84 such that oppositely disposed pairs of fiber optic cables are in optical communication with a given photoelectric source/detector such that any interruption of the light passing between the oppositely disposed pairs of fiber optic cables mounted in the mounting plate 81 will thus produce an output signal from the corresponding photoelectric source/detector 84. The output signal is provided to control 91 which utilizes the output signals to control drive motor 42 and, hence, the latitudinal position of lateral adjustment unit 40. In the exemplary embodiment the control 91 is Struthers-Dunn Director 400I programable controller manufactured by Struthers-Dunn, Inc. of Bettendorf, Iowa. It can thus be seen that as the innerliner material is transported through the opening 82 of the mounting plate 81 of the fiber optic guidance unit 30, the innerliner material 16 will cause the light path between various ones of the ends of fiber optic cables to be interrupted thus providing an indication of the position of the innerliner material within the opening 82 of the mounting plate 8I.

In order to center the innerliner material 16 within the mounting plate 81 which itself is centrally mounted within the applicator 11, the lateral adjustment unit 40 is caused to transport the innerliner material to one side of the mounting plate 81 in order to cause an equal or symetrical number of fiber optic pairs to have their light paths interrupted. The innerliner material 16 is then moved by the lateral adjustment unit 40 to the opposite side of the mounting plate 81 until an unequal or nonsymetrical number of photo detectors have their light paths interrupted. The encoder associated with the lateral adjustment unit then measures the position of the lateral adjustment unit. The lateral adjustment unit then causes the innerliner material 16 to be moved in the opposite direction until another point of non-symetry is obtained. At this point the pulse count is then measured and divided in order to obtain the excess width of the innerliner material 16. The innerliner material is then moved back half the distance of the excess width to center it within the mounting plate 81.

The above described method of centering the innerliner material within the applicator 11 allows for the accurate centering of innerliner material wherein the width of the innerliner material may vary substantially. The method described above thus essentially determines where the center of the innerliner material is located and then positions the center of the innerliner material coincident with the centerline of the applicator 11. This centering is accomplished without physically touching the edges of the innnerliner material 16.

During the time that the innnerliner material 16 is being centered within the applicator 11, the transfer unit 70 is being retracted towards the crush cutter 56.

Figure 9 discloses step 5 of the operating sequence wherein cutting elements 57 of the crush cutter 56 are rotated in order to cut the innerliner material 16.

Step 6 shown in Figure 10 discloses the next step of the operating sequence wherein the gripper unit 50 is caused to grab the innerliner material 16. The manifold 61 with its suction cups 62 is lowered to contact the innerliner material and grip the innerliner material by means of a vacuum applied to the manifold 61. The manifold 61 is then raised slightly.

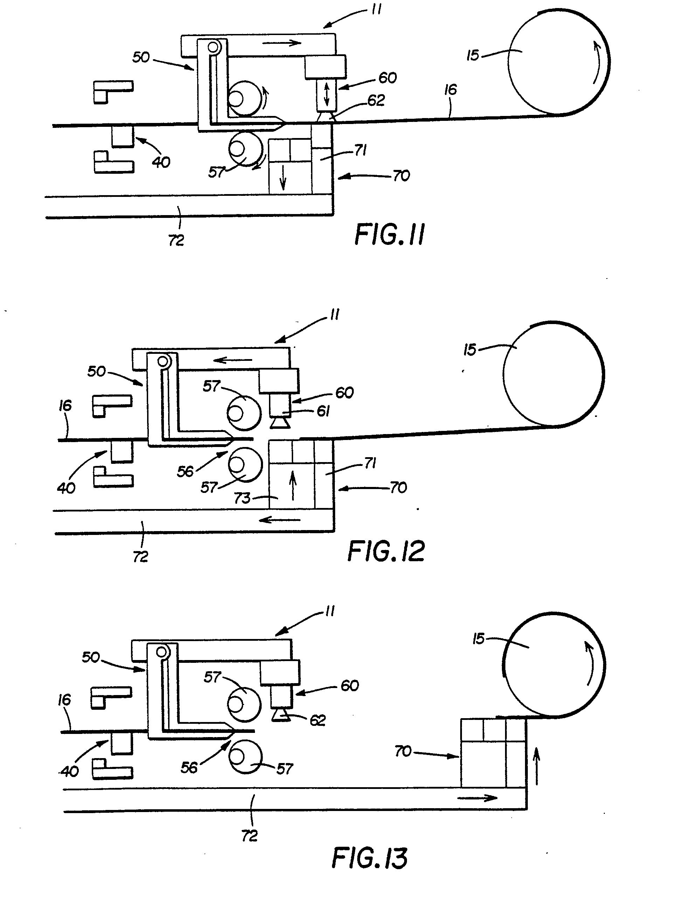

The next step in the operating sequence as shown in Figure 11 discloses the rotating of the cutting elements 57 in order to allow the opening of the crush cutter 56 thereby allowing the gripper unit 50 and the manifold 61 to simultaneously move forward. As the gripper unit 50 and manifold 61 are moved forward the tire building drum is simultaneously rotated to take up the slack in the innerliner material 16. After the manifold 61 is moved over the front manifold 71, the manifold 61 is lowered and a vacuum is applied to the front manifold 71 while removing the vacuum from the manifold 61 and causing air pressure to be applied to the manifold 61, thus causing a transfer of the innerliner material 16 from the suction cups 62 of manifold 61 to the front manifold 71 of transfer unit 70. The manifold 61 is then raised clear of the innnerliner material 16.

In the next step in the operating sequence as disclosed in Figure 12, the upper guide member 60 and the gripper unit 50 are retracted back towards the air table 25 causing the innerliner material 16 to separate from where the innerliner material had been crushed by the crush cutter 56. In addition, during this step the transfer frame 72 is moved back in order to correct for the length of innerliner material cut.

In order to produce an acceptable splice of the cut ends of the innerliner material 16, it is important that the overlap of the crushed ends does not exceed the crushed portions of the innerliner material. Accordingly, the length of the innerliner material 16 cut is slightly shorter than the circumference of the tire building drum 15. In order to correct for this slight shortness of length, the cut portion of the innerliner material 16 is stretched by the retraction of the transfer frame 72 as disclosed in Figure 12 in order to cause the cut length of innerliner material to assume the correct length in order that it may be properly spliced at its ends.

In order that the innerliner 16 may be accurately applied to the tire building drum 15, it is necessary that the tire building drum be controlled with extreme accuracy. Due to the size and moment of inertia of the tire building drum, it is extremely difficult to accurately stop the drum precisely at a specified position. However, it is relatively easy to measure the angular position of the tire building drum by means of a rotary encoder 17 as shown in Figure 2 of the drawings. As shown in Figure 2, the rotary encoder 17 is driven via an intermediate jack shaft from the shaft of the tire building drum 15. Since the rotary encoder 17 is driven from the shaft as opposed to the surface of the tire building drum 15, the rotary encoder 17 measures angular displacement and not circumferential displacement of the tire building drum 15. The rotary encoder 17 thus accurately measures the angular position at which the first end of the innerliner material 16 is applied to the tire building drum as shown in Figure 7 of the drawings. In the exemplary embodiment the angular position is in the form of a count corresponding to the output of the rotary encoder 17. The tire building drum is then rotated for a predetermined fixed period of time and the angular displacement represented by the count output of the rotary encoder 17 is measured. The first count output representing the angular position of the tire building drum at which the first end of the innerliner material 16 was applied to the tire building drum is subtracted from the count obtained as a result of rotating the building drum for the predetermined fixed period of time. The resulting difference is an accurate value corresponding to the length of innerliner material that has already been applied to the tire building drum. Therefore. it can be readily determined the length of innerliner material needed to apply to the remainder of the tire building drum 15.

The innerliner material 16 is then cut to thereby produce a length of innerliner material 16 having a length shorter than the nominal circumference of the tire building drum 15. It should be appreciated that since the instant invention is intended to be used in conjunction with a system employing a plurality of tire building drums 15, the length of innerliner material 16 must be shorter than the circumference of the smallest tire building drum.

The tire building drum 15 is then rotated simultaneously while the transfer unit 70 is moved toward the tire building drum 15 to cause the cut piece of innerliner material 16 to wrap around the tire building drum 15. The coordination of the rotation of the tire building drum 15 and the transfer unit 70 is such that the end of the innerliner material 16 will precisely overlap the previously applied end of the innerliner material. It should be noted that by measuring the angular displacement of the tire building drum instead of its circumferential distance, variations in the diameter of the tire building drum may be compensated for by the stretching of the innerliner material 16 during its application to the tire building drum 15. During the stretching of the innerliner material 16, the holding roll 14 is biased against the tire building drum 15 in order to cause the innerliner material 16 to be wrapped about the tire building drum 15.

During the next step in the operating sequence shown in Figure 13 the trailing edge of the innerliner material is held to the front manifold by a vacuum and the tire building drum 15 is rotated simultaneously while the transfer frame 72 is moved forward and the sub-frame 21 is slightly raised in order to allow the innerliner material to be wrapped about the tire building drum 15.

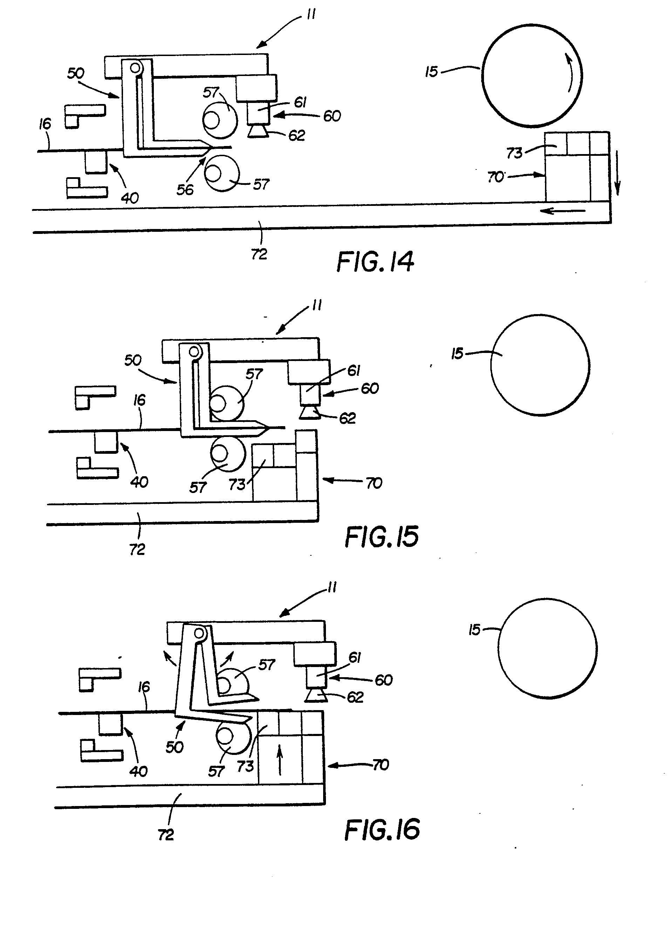

In step number 10 as disclosed by Figure 14 the transfer unit 70 passes under the tire. building drum 15 and the two ends of the innerliner material are spliced together. The transfer unit 70 is then lowered and retracted back to the applicator 11.

During the next step as shown in Figure 15 of the drawings the gripper unit 50 is moved forward in order to position the leading edge of the innerliner material over the rear manifold 73 of the transfer unit 70. In Figure 16 step 12 is disclosed wherein gripper unit 50 releases the innerliner material 16 and a vacuum is caused to be placed on rear manifold 73 of transfer unit 70 in order to transfer the innerliner material from gripper unit 50 to transfer unit 70.

As shown in Figure 17 the gripper unit 50 and the upper guide number 60 are returned to their initial positions. Thus the applicator 11 is ready to begin another operating sequence.

There has thus been disclosed a means for automatically dispensing from a continuous roll of innerliner material, a length of said innerliner material suitable for applying to a tire building drum. And the means for applying said innerliner material to said tire building drum, wherein the innerliner material is centrally positioned within an applicator means by means of a photoelectric array used in conjunction with positioning means. In addition, means are provided in order to accurately apply the innerliner material to the tire building drum with an accurately determined amount of overlap by providing for length correction of the innerliner material applied to the tire building drum.

It will be apparent to those skilled in the art that various modifications and additions may be made in the instant invention without departing from the essential features thereof, which are intended to be defined and secured by the appended claims.

**Claims**

1. A method for applying a length of elastomeric material (16) having a first and second end to a drum (15), comprising the steps of:
   a) attaching the first end of said length of elastomeric material (16) to said drum (15) using transport means (11, 12, 13) adapted to grasp one end of said piece of elastomeric material (16);
   b) rotating said drum (15) to cause said elastomeric material (16) to wrap partially around said drum (15); characterized by:
   c) measuring the angular displacement required to wrap said elastomeric material (16) around said drum (15);
   d) calculating the length of elastomeric material (16) required to completely wrap around said drum (15) based on said angular measurement;
   e) stretching said elastomeric material (16) in order to allow said first end of said elastomeric material (16) to abut said second and said stretching determined by control means (30) adapted to detect the angular displacement of said drum (15); and
   f) attaching the second end of said length of elastomeric material (16) to said drum (15) using transport means (70) adapted to grasp one end of said piece of elastomeric material (16).

2. A method for applying a length of elastomeric material (16) to a drum (15) according to claim 1, characterized by cutting a length of elastomeric material (16) from a continuous length of material slightly shorter than the circumference of said drum (15) having a first and second end.

3. An apparatus for correcting the length of a piece of elastomeric material (16) being applied to a cylinder (15) characterized by:
   a) means (17) for detecting the angular displacement of said cylinder and providing an output thereof:
   b) transport means (11) adapted to grasp one end of said piece of elastomeric material; and
   c) control means (91) adapted to receive the output of said means for detecting angular displacement and cause said transport means to stretch said piece of elastomeric material (16).

4. The apparatus of claim 3 wherein the length of the piece of elastomeric material (16) is less than the circumference of said cylinder (15).

5. The apparatus of claim 3 wherein said transport means (11) is adapted to apply one end of said piece of elastomeric material (16) to said cylinder (15).

6. Apparatus according to claim 3 and for cutting a length of elastomeric material from a continuous roll and applying said length of elastomeric material (16) to a drum (15) wherein the first end of said length of elastomeric material (16) is affixed to said drum and the drum is subsequently rotated in order to cause said length to wrap around said drum, characterized by means for cutting the length of elastomeric material slightly shorter than the circumference of said drum (15) and having further means for stretching said elastomeric material (16) in order to cause said first end to abut said second end when applied to said drum wherein said means for stretching includes means for measuring the angular displacement of said drum (15) and control means (30) for calculating the amount of stretch required.

## Patentansprüche

1. Verfahren zum Aufbringen einer Länge elastomeren Materials (16) mit einem ersten und zweiten Ende auf eine Trommel (15), folgende Stufen umfassend:

a) Befestigen des ersten Endes der Länge elastomeren Materials (16) an der Trommel (15) unter Verwendung von Transportmitteln (11, 12, 13), die dazu ausgelegt sind, ein Ende des Streifens elastomeren Materials (16) zu ergreifen.

b) Rotation der Trommel (15), damit sich das elastomere Material (16) um die Trommel (15) herumwickelt, gekennzeichnet durch:

c) Messen der erforderlichen winkelmäßigen Verstellung, um das elastomere Material (16) um die Trommel (15) herumzuwickeln;

d) Berechnen der erforderlichen Länge elastomeren Materials (16), um die Trommel (15) vollständig zu umwickeln, basierend auf der winkelmäßigen Verstellung;

e) Dehnen des elastomeren Materials (16), damit das erste Ende des elastomeren Materials (16) an das zweite Ende angrenzt, wobei das Dehnen durch Steuermittel (30) festgelegt wird, die winkelmäßige Verstellung der Trommel (15) ermitteln; und

f) Befestigen des zweiten Endes der Länge des elastomeren Materials (16) an der Trommel (15) unter Verwendung von Transportmitteln (70), die ein Ende des Streifens elastomeren Materials (16) ergreifen.

2. Verfahren zum Aufbringen einer Länge elastomeren Materials (16) auf eine Trommel (15) nach Anspruch 1, dadurch gekennzeichnet, daß man eine Länge elastomeren Materials (16) von einer kontinuierlichen Materiallänge abschneidet, die etwas kürzer ist als der Umfang der Trommel (15) und die ein erstes und zweites Ende besitzt.

3. Vorrichtung zur Längenkorrektor eines Streifens elastomeren Materials (16), der auf einen Zylinder bzw. eine Trommel (15) aufgetragen wird, gekennzeichnet durch

a) Mittel (17) zur Ermittlung der winkelmäßigen Verstellung des Zylinders und Vorsehen eines Ausgangssignals davon;

b) Transportmittel (11), das ein Ende des Streifens aus elastomerem Material ergreift; und

c) Steuermittel (91), die das Ausgangssignal des Mittels zur Ermittlung der winkelmäßigen Verstellung aufnehmen und bewirken, daß das Transportmittel den Streifen des elastomeren Materials (16) dehnen.

4. Vorrichtung nach Anspruch 3, dadurch gekennzeichnet, daß die Länge des Streifens aus elastomerem Material (16) geringer ist als der Umfang des Zylinders (15)

5. Vorrichtung nach Anspruch 3, dadurch gekennzeichnet, daß das Transportmittel (11) ein Ende des Streifens aus elastomerem Material (16) am Zylinder (15) anbringen kann.

6. Vorrichtung nach Anspruch 3 und zum Abschneiden einer Länge elastomeren Materials von einer kontinuierlichen Rolle und Aufbringen der Länge elastomeren Materials (16) auf eine Trommel (15), wobei das erste Ende der Länge elastomeren Materials (16) an der Trommel befestigt wird und die Trommel anschließend gedreht wird, damit die Länge um die Trommel herumgewickelt wird, gekennzeichnet durch Mittel zum Abschneiden einer etwas kürzeren Länge elastomeren Materials im Vergleich zum Umfang der Trommel (15), wobei ferner Mittel zum Dehnen des elastomeren Materials (16) vorgesehen sind, damit das erste Ende an das zweite Ende angrenzt, wenn sie auf die Trommel aufgetragen sind, wobei das Mittel zum Dehnen ein Mittel zum Messen der winkelmässigen Verstellung der Trommel (15) sowie ein Steuermittel (60) zur Berechnung des erforderlichen Dehnungsausmasses umfaßt.

## Revendications

1. Procédé pour appliquer une longueur de matière élastomérique (16) ayant des première et seconde extrémités sur un tambour (15), comprenant les étapes qui consistent:

a) à attacher la première extrémité de ladite longueur de matière élastomérique (16) sur ledit tambour (15) en utilisant des moyens de transport (11, 12, 13) conçus pour saisir une extrémité de ladite pièce de matière élastomérique (16);

b) à faire tourner ledit tambour (15) pour provoquer un enroulement de ladite matière élastomérique (16) partiellement autour dudit tambour (15); caractérisé en ce qqu'il consiste:

c) à mesurer le déplacement angulaire demandé pour enrouler ladite matière élastomérique (16) autour dudit tambour (15);

d) à calculer la longueur de matière élastomérique (16) nécessaire pour qu'elle s'enroule complètement autour dudit tambour (15) sur la base de ladite mesure angulaire;

e) à étirer ladite matière élastomérique (16) afin de permettre à ladite première extrémité de ladite matuière élastomérique (16) de buter contre ladite seconde extrémité, ledit étirage étant déterminé par des moyens (30) de commande conçus pour détecter le déplacement angulaire dudit tambour (15); et

f) à attacher la seconde extrémité de ladite longueur de matière élastomérique (16) audit tambour (15) en utilisant des moyens de transport (70) conçus pour saisir une extrémité de ladite pièce de matière élastomérique (16).

2. Procédé pour appliquer une longueur de matière élastomérique (16) sur un tambour (15) selon la revendication 1, caractérisé en ce qu'il consiste à couper une longueur de matière élastomérique (16) à partir d'une longueur continue de matière, légèrement plus courte que la circonférence dudit tambour (15) ayant des première et seconde extrémités.

3. Appareil pour corriger la longueur d'une pièce de matière élastomérique (16) en cours d'application sur un cylindre (15), caractérisé par:

a) des moyens (17) destinés à détecter le déplacement angulaire dudit cylindre et à produire un signal correspondant de sortie;

b) des moyens de transport (11) conçus pour saisir une extrémité de ladite pièce de matière élastomérique; et

c) des moyens de commande (91) conçus pour recevoir le signal de sortie desdits moyens de détection du déplacement angulaire et pour amener lesdits moyens de transport à étirer ladite pièce de matière élastoqmérique (16).

4. Appareil selon la revendication 3, dans lequel la longueur de la pièce de matière élastomérique (16) est inférieure à la circonférence dudit cylindre (15).

5. Appareil selon la revendication 3, dans lequel lesdits moyens (11) de transport sont conçus pour appliquer une extrémité de ladite pièce de matière élastomérique (16) sur ledit cylindre (15).

6. Appareil selon la revendication 3 pour couper une longueur de matière élastomérique à partir d'un rouleau continu et appliquer ladite longueur de matière élastomérique (16) sur un tambour (15), dans lequel la première extrémité de ladite longueur de matière élastomérique (16) est fixée audit tambour et le tambour est ensuite mis en rotation afin d'amener ladite longueur à s'enrouler autour dudit tambour, caractérisé par des moyens pour couper la longueur de matière élastomérique afin qu'elle soit légèrement plus courte que la circonférence dudit tambour (15) et comportant en outre des moyens pour étirer ladite matière élastomérique (16) afin d'amener ladite première extrémité à buter contre ladite seconde extrémité lors de l'application sur ledit tambour, lesdits moyens d'étirage comprenant des moyens destinés à mesurer le déplacement angulaire dudit tambour (15) et des moyens (30) de commande destinés à calculer l'amplitude de l'étirage demandé.

FIG.1

FIG.2

FIG.3

3

FIG.4

FIG.17

**FIG.5**

**FIG.6**

**FIG.7**

FIG.8

FIG.9

FIG.10

FIG.11

FIG.12

FIG.13

FIG.14

FIG.15

FIG.16

FIG. 18